# EUROPEAN PATENT SPECIFICATION

(11) **EP 3 101 463 B1**
(45) Date of publication and mention of the grant of the patent: **04.09.2024**
(21) Application number: 15742551.3
(22) Date of filing: 15.01.2015
(51) Int. Cl.: G02B 27/48, G02B 3/00, G03F 7/20

(54) **LASER ANNEALING APPARATUS**
VORRICHTUNG FÜR LASERHÄRTEN
APPAREIL DE RECUIT LASER

(30) Priority: 29.01.2014 CN 201410043852
(43) Date of publication of application: 07.12.2016
(73) Proprietor: Shanghai Micro Electronics Equipment (Group) Co., Ltd., Zhangjiang High-Tech Park Shanghai 201203 (CN)
(72) Inventor: XU, Jianxu, Shanghai 201203 (CN); LAN, Yanping, Shanghai 201203 (CN)
(74) Representative: Lavoix
(86) International application number: PCT/CN2015/070747
(87) International publication number: WO 2015/113469

(56) References cited:
- EP-A1- 2 128 694
- CN-A- 101 356 624
- CN-A- 102 057 467
- CN-A- 102 326 169
- CN-A- 102 576 152
- DE-U1- 202006 007 691
- DE-U1- 202006 007 691
- JP-A- 2006 049 656
- US-A- 5 963 305
- US-A- 6 069 739
- US-A1- 2010 033 829
- US-B1- 6 898 216

## Description

### TECHNICAL FIELD

The present invention relates to the fields of semiconductor and liquid crystal display (LCD) and, more particularly, to a laser annealing apparatus.

### BACKGROUND

In the fields of semiconductor and liquid crystal display (LCD), a doping process is followed by an annealing process for increasing the mobility of carriers implanted during the doping process. Conventionally, the annealing process was accomplished using electron beams, flashing light, continuous incoherent radiation, graphite heating, etc. While electron beams provide more homogeneous energy distributions, are usable in the treatment of wide band gap semiconductors, and can achieve controlled annealing depths by adjusting energy of the electrons, when compared to laser beams, they are disadvantageous in that their use requires to be made in vacuum. For solid-phase annealing processes, electron beams are more favorable than laser beams and require the presence of electrically active dopants in high concentrations. In contrast, laser beams are more suited to use in liquid-phase annealing processes, because photons can be absorbed at the surface of a treated article and thereby achieves a precisely controlled penetration depth before the article melts. On the other hand, electrons tend to penetrate deep and control of their penetration depth within a shallow layer is hardly possible. Traditional furnace annealing processes cannot, even at an annealing temperature of up to 1,150 °C, eliminate crystallographic defects to a high extent achievable by laser annealing, especially nanosecond pulsed laser annealing. Continuous-wave laser annealing is more suitable for use in the treatment of a large surface and is capable of transforming an amorphous layer into a monocrystalline structure, with a small number of defects remaining in the monocrystalline structure, though. However, the methods other than laser annealing are recommended due to their low cost, as long as the requirements can be satisfied. Laser annealing provides particular advantages, including high activation efficiency, improved surface roughness, a reduced impurity concentration, and a low temperature on a side of the article being annealed opposing the side of the article where the annealing takes place, which ensures non-invasiveness to the article, in applications with high requirements, such as localized annealing, shallow doping with an electrically active dopant present in a high concentration, and annealing of complex semiconductor structures. Thanks to its high activation efficiency, less invasiveness and other advantages over the conventional annealing methods, it is likely for laser annealing in the future to partially replace the conventional techniques in Insulated Gate Bipolar Transistor (IGBT), Thin Film Transistors (TST), Contact Image Sensors (CIS) and other fields and to have a rapidly growing demand.

Performance of a device, the fabrication of which involves laser annealing, is in direct relation to the homogeneity of the device after the annealing process, and this homogeneity is in turn critically determined by the shaping and homogenization of a laser beam used in the process. Since the coherent nature of the laser beam dramatically affects quality of the homogenization, coherence of the beam must be eliminated by the used optical system.

A first method for coherence elimination is to utilize a two-dimensional spatial modulator to modulate a beam resulting from re-convergence of randomly reflected and refracted parts of the laser beam into tricolor signals which allows the beam to be displayed in a color video display as a clear image without any interference fringes. However, this method is typically applied in laser imaging techniques, and is neither suitable for use with high-power laser beams nor in scenarios where particular illumination fields are formed.

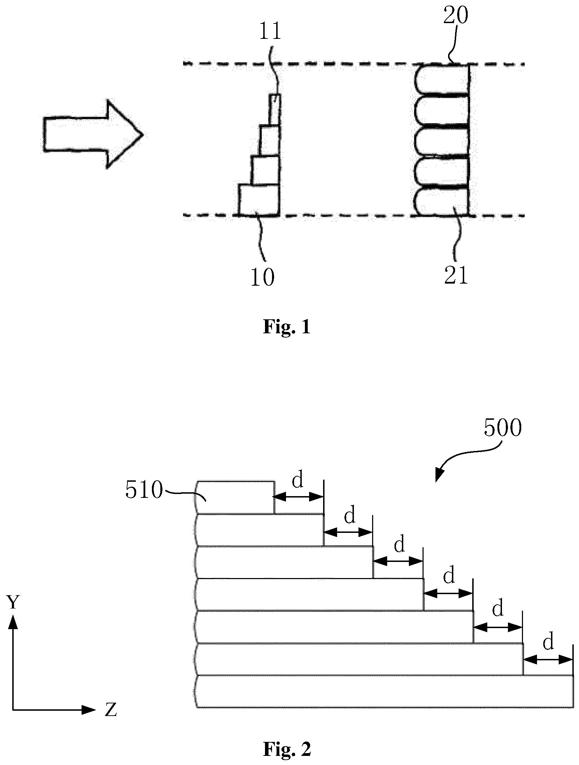

Another coherence elimination method is shown in Fig. 1, which employs a beam homogenizer for laser annealing composed of a de-coherence system 10 and a lens array 20. The de-coherence system 10 is consisted of a plurality of equally wide transparent glass plates 11, and the lens array 20 of a plurality of cylindrical lenses 21 having the same length and width. The width of the transparent glass plates 11 is equal to the width of the cylindrical lenses 21. In the direction of an optical axis (i.e., the direction indicated by the arrow in the figure), any adjacent two of the transparent glass plates 11 have a length difference that is greater than a coherence length of the used laser (not shown in figure), and all the length differences between adjacent ones of the transparent glass plates 11 are equal. The transparent glass plates 11 provide optical paths for respective laser beam portions that pass through the transparent glass plates 11 in their lengthwise directions (i.e., the direction of the arrow). As such, the laser beam portions have identical optical path differences that are greater than the coherence length, thereby eliminating their mutual coherence, i.e., making them incoherent from one another. Therefore, the transparent glass plates 11 create a de-coherence effect. In addition, the beam portions can further be homogenized by the cylindrical lenses 21. However, in this method, as the transparent glass plates 11 and the cylindrical lenses 21 are small in size (with the incident surface having X- and Y-dimensions of both about 0.5 mm), apart from the beneficial de-coherence effect, they will also cause diffraction which can spoil the homogenization effect. Further, the transparent glass plates 11 are separate from the cylindrical lenses 21. This increases difficulties in construction of the optical system, because the plates and lenses are required to be maintained in exact correspondence in terms of relative tilts and offsets in order to achieve a high precision, thus leading to cost increases.

U.S. patent No. US6898216 discloses that speckle of a laser beam may be reduced by inserting an anti-speckle apparatus in the beam path to disrupt its spatial coherence while maintaining its temporal coherence. In one embodiment, the anti-speckle apparatus is a phase retarder plate bearing periodic optically-coated regions. Transmission or reflection of the beam through coated and uncoated regions causes an internal phase shift of first beam portions relative to second beam portions, thereby disrupting spatial coherence. Size and thickness of the coated regions can be carefully tailored to meet requirements of stepper and scanner equipment manufacturers for maximum allowable spatial coherence expressed as a minimum permissible number of coherent cells across the beam cross-section. The anti-speckle apparatus may serve to outcouple the laser beam, as well, and a fly eye lens may be positioned after the anti-speckle appartus.

U.S. patent No. US6069739 discloses a technique for introducing variable phase delay across portions of a spatially coherent light beam, such as a laser, without changing the focal length of the portions of the beam. A fly's-eye lens array is utilized to distribute the light for a more uniform illumination, but different length air gaps are introduced in the lens elements to provide a variable delay of portions of the beam. In a second scheme, a set of prisms is positioned in the path of the laser beam, in which the shape of the prism introduces variable phase delay across the cross-section of the beam.

European Patent publication No. EP2128694 discloses a laser illuminating device and an image display device that enable to remove speckle noises in a diffraction field and an image field, uniformly illuminate an illumination plane, and realize miniaturization. The laser illuminating device includes a laser light source, a first lens including a plurality of microlenses each having a predetermined numerical aperture in an in-plane direction, each of the microlenses being adapted to expand laser light emitted from the laser light source to thereby superimpose the laser light transmitted through each of the microlenses; and a second lens having an effective diameter larger than an effective diameter of the first lens, and for compensating for a divergence angle of the laser light expanded by each of the plurality of the microlenses.

U.S. patent No.US5963305 discloses an illumination system including an optical integrator having element lenses arrayed in a direction perpendicular to an optical axis, and an optical system for directing lights from the element lenses of the integrator to a surface to be illuminated, wherein the element lenses include particular element lenses having different optical characteristics which are determined so that upon the surface to be illuminated those lights from the particular element lenses are partly superposed one upon another to provide a non-uniform illuminance distribution on the surface with respect to a predetermined direction.

DE-U1-202006007691 discloses a device for homogenizing LASER-radiation.

US-A1-2010/0033829 discloses a device for the homogenization of radiation.

JP-A-2006/049656 discloses a method and apparatus for forming a crystallized film using laser light.

Further devices and methods are known from CN102576152; CN102326169; CN101356624 and CN102057467.

### SUMMARY OF THE INVENTION

The present invention overcomes the above problems encountered with the homogenization systems employed in the conventional laser annealing apparatuses by presenting a laser annealing apparatus according to claim 1.

In order to solve the problems, the beam homogenizer for laser annealing is for use in a laser annealing apparatus including a laser for producing a laser beam and the beam homogenizer includes a plurality of cylindrical lenses which have a same radius of curvature and same dimensions in a plane of curvature; the plurality of cylindrical lenses have different lengths in a direction of transmission of the laser beam; and any two adjacent ones of the plurality of cylindrical lenses have a length difference, in the direction of transmission of the laser beam, greater than a coherence length of the laser.

Preferably, the laser annealing apparatus may further include a collimating system, a beam expander system and a focusing system, wherein the laser, the collimating system, the beam expander system, the beam homogenizer and the focusing system are disposed in sequence in the direction of transmission of the laser beam in the laser annealing apparatus; and the laser beam produced by the laser is consecutively collimated into a parallel beam by the collimating system, expanded to a desired size by the beam expander system and homogenized by the beam homogenizer, and then forms a desired spot after passing though the focusing system.

According to the invention, the length differences between two adjacent ones of the plurality of cylindrical lenses in the direction of transmission of the laser beam differ from one another.

Preferably, the number of the plurality of cylindrical lenses may be from 5 to 7. The radius of curvature of the plurality of cylindrical lenses is from 100 mm to 200 mm. The plurality of cylindrical lenses have a diameter in the plane of curvature in the Y direction of 4 mm to 10 mm.

Preferably, the cylindrical lenses may be fabricated by cold processing.

Compared to the prior art, the present invention offers the following advantages:
1. Replacement of the transparent glass plates combined with cylindrical lenses according to the prior art with the differently long, larger cylindrical lenses, in accordance with the present invention, can still achieve de-coherence and homogenization of the laser beam.
2. By use of the larger cylindrical lenses, diffraction and hence its impact on the homogenization effect can be circumvented.
3. In contrast to the conventional homogenization system in which the transparent glass plates are physically separate from the cylindrical lenses, thus increasing difficulties in construction of the system and requiring exact correspondence therebetween, the present invention dispenses with the need for such correspondence and thereby results in lower construction complexity and cost savings.
4. The larger cylindrical lenses can be fabricated using a conventional cold process, which results in reduced processing difficulties and further cost reductions.

### BRIEF DESCRIPTION OF THE DRAWINGS

Fig. 1 is a schematic illustration of a homogenization system in an existing laser annealing apparatus.
Fig. 2 is a schematic illustration of a beam homogenizer for laser annealing according to a first embodiment lying outside the scope of the present invention.
Fig. 3 is a left view of Fig. 2.
Fig. 4 is a schematic illustration of a beam homogenizer for laser annealing according to a second embodiment and according to the present invention.
Fig. 5 is a schematic illustration of a laser annealing apparatus according to a specific embodiment of the present invention.
Fig. 6 is a diagram showing an X-directional energy distribution of a light spot obtained by a beam homogenizer for laser annealing
Fig. 7 is a diagram showing a Y-directional energy distribution of a light spot obtained by a beam homogenizer for laser annealing

In Fig. 1: 10-de-coherence system, 11-transparent glass plate, 20-lens array, and 21-cylindrical lens.

In Figs. 2 to 5: 100-laser, 200-collimating system, 300-first expander, 400-second expander, 500-beam homogenizer for laser annealing, 510-cylindrical lens, and 600-focusing system.

### DETAILED DESCRIPTION

The purposes, features and advantages of the invention will become more apparent from the following detailed description of several specific embodiments which is to be read in connection with the accompanying drawings. It is noted that the drawings are provided in a very simplified form not necessarily presented to scale, with the only purpose for simplicity and clarity in explaining the embodiments.

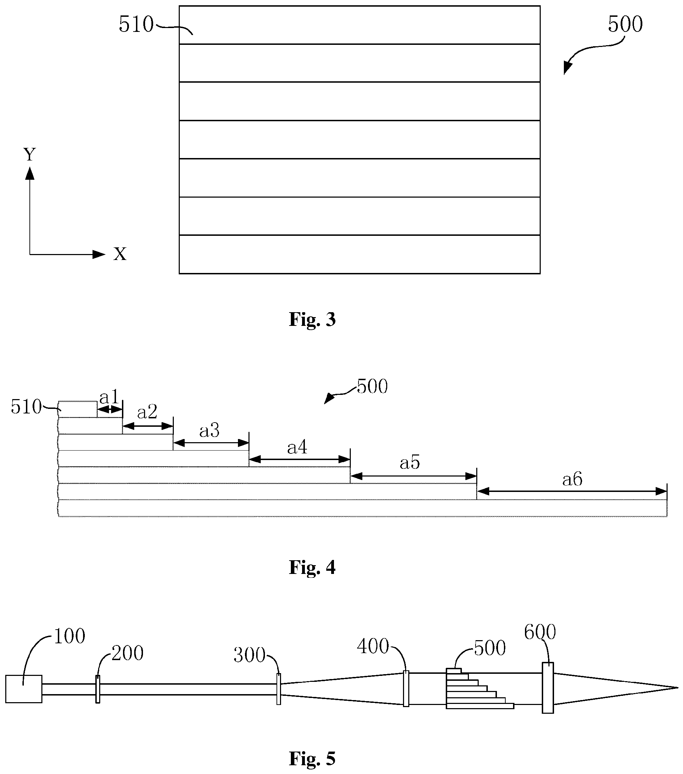

With reference to Figs. 2 and 3, a beam homogenizer 500 for laser annealing which is incorporated in a laser annealing apparatus, includes a number of cylindrical lenses 510. The cylindrical lenses 510 have the same radius of curvature and the same dimensions in a plane of curvature. That is, the cylindrical lenses 510 have the same dimensions of an incident surface (i.e., the same width in an X direction and same thickness in a Y direction). In addition, the cylindrical lenses 510 have different lengths in a Z direction, i.e., the direction of transmission of the beam, and any adjacent two of the cylindrical lenses 510 have a length difference in the direction of transmission of the beam, that is greater than a coherence length of a laser 100 (Fig. 5) in the laser annealing apparatus. Replacement of the combination of the transparent glass plates and the cylindrical lenses according to the prior art with the larger-sized cylindrical lenses 510 according to the present invention can also achieve the de-coherence and homogenization effects while addressing the homogenization-detrimental diffraction problem and resulting in reductions in the complexity of construction of the optical system and cost.

Preferably, with focused reference to Fig. 5, the laser annealing apparatus can further include the laser 100, a collimating system 200, a beam expander system and a focusing system 600. In the laser annealing apparatus, along the direction of transmission of the beam, the laser 100, the collimating system 200, the beam expander system, the beam homogenizer 500 and the focusing system 600 may be arranged in this sequence. In this arrangement, the beam is emitted from the laser 100 and is then collimated into a parallel beam by the collimating system 200. The collimated beam is expanded by the beam expander system to a desired size and is then homogenized by the beam homogenizer 500. Finally, the homogenized beam passes through the focusing system 600 and thereby forms a desired spot on an image plane.

Preferably, the beam expander system may include a first expander 300 and a second expander 400.

### EMBODIMENT 1

Outside the scope of the present invention, with focused reference to Fig. 2, the length differences between any adjacent two of the cylindrical lenses 510 in the direction of transmission of the beam are fixed values, and the length differences between any adjacent two of the cylindrical lenses 510 in the direction of transmission of the beam are all d, in accordance with this embodiment.

The arrangement of the cylindrical lenses 510 is not limited to that shown in Fig. 2 in which each of the cylindrical lenses 510 is longer than any one of the cylindrical lenses 510 disposed thereabove, because the cylindrical lenses 510 may also be arranged in other ways.

Preferably, the number of the cylindrical lenses 510 is in the range of from 5 to 7. The 5 to 7 cylindrical lenses 510 form a cylindrical-lens array which divides the beam into smaller sub-beams each exiting a respective one of the cylindrical lenses 510 with a certain angle of divergence. After passing through the downstream focusing system 600, these sub-beams combine into a homogenized beam which can result in a homogenous light spot with a particular size. As the portions of the beam corresponding to the sub-beams have passed through the differently long cylindrical lenses 510, any adjacent two of which has a length difference that is greater than the coherence length of the laser 100, the optical path differences among the sub-beams are inconsistent and are all greater than the coherence length. Therefore, there are no longer constant phase differences among the sub-beams that are necessary for the occurrence of coherence among them. That is, elimination of their coherence is achieved, which leads to a better beam homogenization effect.

The radius of curvature of the cylindrical lenses 510 is between 100 mm and 200 mm and is adjustable according to a desired size of the spot. Each of the cylindrical lenses 510 has a relatively great dimension in the direction of curvature, i.e., the thickness of the cylindrical lens in the Y direction, which is approximately from 4 mm to 10 mm. This dimension can be determined based on a diameter of the beam incident on the cylindrical-lens array and the number of the cylindrical lenses 510. The other dimension of each of the cylindrical lenses 510, i.e., the width of the cylindrical lens in the X direction, is approximately equal to the diameter of the incident beam. Therefore, the dimensions of the cylindrical lenses 510 in the two directions are both determinable by the diameter of the beam incident on the cylindrical-lens array. Further, the curvature of the cylindrical lenses 510 can be determined based on the desired size of the spot and configured to match the dimensions of the cylindrical lenses 510 in the two directions.

Preferably, since the cylindrical lenses 510 each have a relatively great dimension in the direction of curvature, they can be manufactured by a conventional cold process usually used for the fabrication of optics. This reduces difficulties in the fabrication of the components and thereby results in significant reductions in cost.

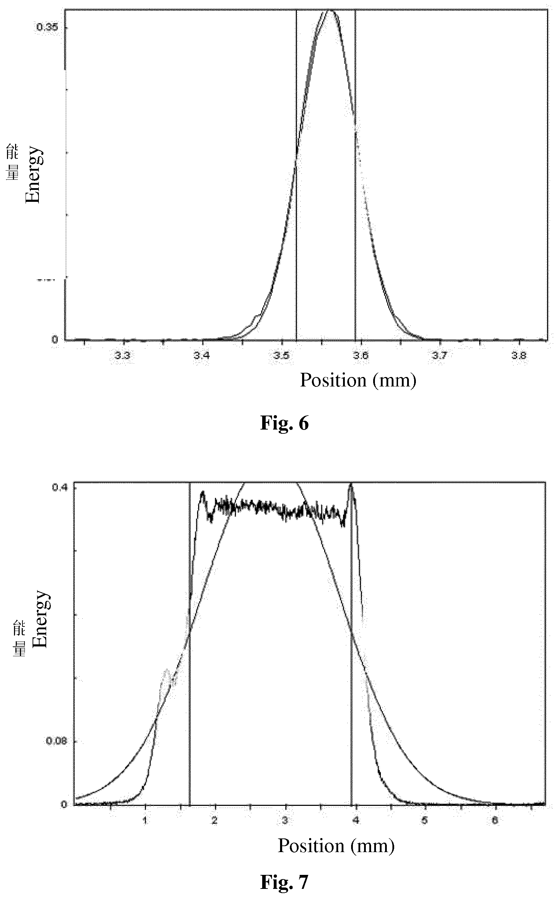

With focused reference to Figs. 6 and 7, an energy distribution of the formed two-dimensional sport in the untreated X direction (Fig. 6), i.e., the direction in which the laser beam has not been homogenized by the beam homogenizer 500, remains a Gaussian distribution. In contrast, an energy distribution of the two-dimensional sport in the Y direction (i.e., the direction of curvature of the cylindrical lenses 510), in which the de-coherence and homogenization by the cylindrical lenses 510 is applied, as shown in Fig. 7, appears as a truncated curve with a generally flat portion corresponding to a more even energy distribution, demonstrating a good homogenization result of the beam homogenizer 500 according to the present invention.

### EMBODIMENT 2

According to the invention and with focused reference to Fig. 4, this embodiment differs from Embodiment 1 in that, according to this embodiment, the length differences between any two adjacent ones of the cylindrical lenses 510 in the direction of transmission of the beam are different from one another, i.e., inconsistent lengths. In this embodiment, the length differences between any two adjacent ones of the cylindrical lenses 510 in the direction of transmission of the beam are sequentially from the top downward a1, a2, a3, a4, a5 and a6, wherein a1 ≠ a2 ≠ a3 ≠ a4 ≠ as t a6. According to this embodiment, satisfaction of the prerequisite for the occurrence of coherence can also be made impossible and de-coherence can be achieved to result in a better beam homogenization effect.

In summary, the present invention provides a beam homogenizer 500 for laser annealing, for use in a laser annealing apparatus incorporating a laser 100 for producing a laser beam. The beam homogenizer 500 has a number of cylindrical lenses 510. The cylindrical lenses 510 have the same radius of curvature and same dimensions in a plane of curvature. In addition, the cylindrical lenses 510 have different lengths in a direction of transmission of the laser beam, and any adjacent two of the cylindrical lenses 510 have a length difference in the direction of transmission of the laser beam, that is greater than a coherence length of the laser 100. According to the present invention, the differently long, larger cylindrical lenses 510 replace the combination of the transparent glass plates and cylindrical lenses according to the prior art, while still achieving de-coherence and homogenization of the laser beam. In addition, diffraction that is detrimental to the homogenization effect can be circumvented, and reductions in the complexity of construction of the optical system and cost can be realized.

It is apparent that those skilled in the art can make various modifications and variations to the present invention without departing from the scope of the invention as defined by the claims. Accordingly, it is intended that the invention embraces all such modifications and variations as fall within the scope of the appended claims.

## Claims

1. A laser annealing apparatus comprising a beam homogenizer (500) for laser annealing and a laser (100) for producing a laser beam, wherein: the beam homogenizer (500) comprises a plurality of cylindrical lenses (510); the plurality of cylindrical lenses (510) have different lengths in a direction of transmission of the laser beam; wherein
the plurality of cylindrical lenses (510) have a same radius of curvature and same dimensions in a plane of curvature defined by X and Y directions, where the X direction is orthogonal to the Y direction; and **characterized in that**:
any two adjacent ones of the plurality of cylindrical lenses (510) have a length difference, in the direction of transmission of the laser beam, greater than a coherence length of the laser (100), and **in that** the length differences between two adjacent ones of the plurality of cylindrical lenses (510) in the direction of transmission of the laser beam differ from one another, the radius of curvature of each of the plurality of cylindrical lenses (510) is from 100 mm to 200 mm, each of the plurality of cylindrical lenses (510) has a thickness in the Y direction of 4 mm to 10 mm, and each of the plurality of cylindrical lenses (510) has a width in the X direction equal to a diameter of the laser beam.

2. The laser annealing apparatus according to claim 1, wherein: the laser annealing apparatus further comprises a collimating system (200), a beam expander system and a focusing system (600); the laser, the collimating system (200), the beam expander system, the beam homogenizer (500) and the focusing system (600) are disposed in sequence in the direction of transmission of the laser beam in the laser annealing apparatus; and the laser beam produced by the laser (100) is consecutively collimated into a parallel beam by the collimating system (200), expanded to a desired size by the beam expander system and homogenized by the beam homogenizer (500), and then forms a desired spot after passing though the focusing system (600).

3. The laser annealing apparatus according to claim 2, wherein a number of the plurality of cylindrical lenses (510) and the dimensions of the plurality of cylindrical lenses (510) in the plane of curvature are determined by the diameter of the laser beam incident on the beam homogenizer (500).

4. The laser annealing apparatus according to claim 1, wherein the number of the plurality of cylindrical lenses (510) is from 5 to 7.

## Patentansprüche

1. Laserglühvorrichtung, umfassend einen Strahlhomogenisierer (500) zum Laserglühen und einen Laser (100) zum Erzeugen eines Laserstrahls, wobei: der Strahlhomogenisierer (500) eine Vielzahl von zylindrischen Linsen (510) umfasst; die Vielzahl von zylindrischen Linsen (510) unterschiedliche Längen in einer Übertragungsrichtung des Laserstrahls haben; wobei
die Vielzahl von zylindrischen Linsen (510) einen gleichen Krümmungsradius und gleiche Abmessungen in einer Krümmungsebene haben, die durch die X- und Y-Richtung definiert ist, wobei die X-Richtung orthogonal zur Y-Richtung ist; und **dadurch gekennzeichnet, dass**:
zwei beliebige benachbarte der Vielzahl von zylindrischen Linsen (510) in der Durchlassrichtung des Laserstrahls einen Längenunterschied aufweisen, der größer ist als eine Kohärenzlänge des Lasers (100), und die Längenunterschiede zwischen zwei benachbarten der Vielzahl von zylindrischen Linsen (510) in der Durchlassrichtung des Laserstrahls voneinander abweichen, der Krümmungsradius jeder der Vielzahl von zylindrischen Linsen (510) 100 mm bis 200 mm beträgt, jede der Vielzahl von zylindrischen Linsen (510) eine Dicke in der Y-Richtung von 4 mm bis 10 mm aufweist und jede der Vielzahl von zylindrischen Linsen (510) eine Breite in der X-Richtung aufweist, die gleich einem Durchmesser des Laserstrahls ist.

2. Laserglühvorrichtung nach Anspruch 1, wobei: die Laserglühvorrichtung ferner ein Kollimationssystem (200), ein Strahlaufweitungssystem und ein Fokussierungssystem (600) umfasst; der Laser, das Kollimationssystem (200), das Strahlaufweitungssystem, der Strahlhomogenisator (500) und das Fokussierungssystem (600) in der Übertragungsrichtung des Laserstrahls in der Laserglühvorrichtung nacheinander angeordnet sind; und der von dem Laser (100) erzeugte Laserstrahl nacheinander durch das Kollimationssystem (200) zu einem parallelen Strahl kollimiert, durch das Strahlexpansionssystem auf eine gewünschte Größe expandiert und durch den Strahlhomogenisierer (500) homogenisiert wird und dann nach dem Durchgang durch das Fokussiersystem (600) einen gewünschten Punkt bildet.

3. Laserglühvorrichtung nach Anspruch 2, wobei eine Anzahl der Vielzahl von zylindrischen Linsen (510) und die Abmessungen der Vielzahl von zylindrischen Linsen (510) in der Krümmungsebene durch den Durchmesser des auf den Strahlhomogenisierer (500) einfallenden Laserstrahls bestimmt werden.

4. Laserglühvorrichtung nach Anspruch 1, wobei die Anzahl der Vielzahl von zylindrischen Linsen (510) 5 bis 7 beträgt.

## Revendications

1. Appareil de recuit laser comprenant un homogénéisateur de faisceau (500) pour le recuit laser et un laser (100) pour produire un faisceau laser, dans lequel : l'homogénéisateur de faisceau (500) comprend une pluralité de lentilles cylindriques (510) ; la pluralité de lentilles cylindriques (510) présente des longueurs différentes dans une direction de transmission du faisceau laser ; dans lequel
la pluralité de lentilles cylindriques (510) présente le même rayon de courbure et les mêmes dimensions dans un plan de courbure défini par les directions X et Y, la direction X étant perpendiculaire à la direction Y ; et **caractérisé en ce que** :
deux lentilles cylindriques adjacentes parmi la pluralité de lentilles cylindriques (510) présentent une différence de longueur, dans la direction de transmission du faisceau laser, supérieure à une longueur de cohérence du laser (100), et **en ce que** les différences de longueur entre deux lentilles cylindriques adjacentes parmi la pluralité de lentilles cylindriques (510) dans la direction de transmission du faisceau laser diffèrent l'une de l'autre, le rayon de courbure de chacune de la pluralité de lentilles cylindriques (510) est compris entre 100 mm et 200 mm, chacune de la pluralité de lentilles cylindriques (510) présente une épaisseur dans la direction Y comprise entre 4 mm et 10 mm, et chacune de la pluralité de lentilles cylindriques (510) présente une largeur dans la direction X égale au diamètre du faisceau laser.

2. Appareil de recuit laser selon la revendication 1, dans lequel : l'appareil de recuit laser comprend en outre un système de collimation (200), un système d'expansion du faisceau et un système de focalisation (600) ; le laser, le système de collimation (200), le système d'expansion du faisceau, l'homogénéisateur de faisceau (500) et le système de focalisation (600) sont disposés en séquence dans la direction de transmission du faisceau laser dans l'appareil de recuit laser ; et le faisceau laser produit par le laser (100) est consécutivement collimaté en un faisceau parallèle par le système de collimation (200), élargi à une taille souhaitée par le système d'expansion du faisceau et homogénéisé par l'homogénéisateur de faisceau (500), puis forme un point souhaité après avoir traversé le système de focalisation (600).

3. Appareil de recuit au laser selon la revendication 2, dans lequel un nombre de la pluralité de lentilles cylindriques (510) et les dimensions de la pluralité de lentilles cylindriques (510) dans le plan de courbure sont déterminés par le diamètre du faisceau laser incident sur l'homogénéisateur de faisceau (500).

4. Appareil de recuit laser selon la revendication 1, dans lequel le nombre de la pluralité de lentilles cylindriques (510) est compris entre 5 et 7.
